# EUROPÄISCHE PATENTANMELDUNG

(11) **EP 3 476 882 A1**
(43) Veröffentlichungstag der Anmeldung: **01.05.2019**
(21) Anmeldenummer: 17198120.2
(22) Anmeldetag: 24.10.2017
(51) Int. Cl.: C08G 59/40, C09J 163/00

(54) **HITZEHÄRTENDE EPOXIDHARZZUSAMMENSETZUNG MIT HOHER LAGERSTABILITÄT**

(71) Anmelder: SIKA TECHNOLOGY AG, 6340 Baar (CH)
(72) Erfinder: Munzinger, Noah, 8047 Zürich (CH); Krüger, Christian, 8049 Zürich (CH)
(74) Vertreter: Sika Patent Attorneys

(57) **Zusammenfassung**

Die vorliegende Erfindung betrifft einkomponentige hitzehärtende Epoxidharzzusammensetzungen, welche sich durch eine gute Lagerstabilität auszeichnen. Die Epoxidharzzusammensetzungen sind insbesondere geeignet für den Einsatz als Rohbauklebstoff und zur Herstellung von Strukturschäumen.

## Beschreibung

### Technisches Gebiet

Die Erfindung betrifft das Gebiet der hitzehärtenden Epoxidharzzusammensetzungen, insbesondere für den Einsatz als Rohbauklebstoff und zur Herstellung von Strukturschäumen.

### Stand der Technik

Hitzehärtende Epoxidharzzusammensetzungen sind seit langem bekannt. Ein wichtiges Einsatzgebiet von hitzehärtenden Epoxidharzzusammensetzungen findet sich im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.

Damit eine Härtung erfolgen kann werden hitzeaktivierbare Härter für Epoxidharze verwendet. Diese hitzeaktivierbaren Härter führen jedoch zu Problemen mit der Lagerstabilität der hitzehärtenden Epoxidharzzusammensetzungen. Insbesondere bei zusätzlicher Verwendung von Beschleunigern für erwähnte Härter wie beispielsweise Harnstoffe, latente Imidazole sowie Amin-Bortrifluorid Komplexe, ist dieses Problem besonders ausgeprägt. Es besteht deshalb ein Bedürfnis nach hitzehärtenden Epoxidharzzusammensetzungen, welche einerseits eine hohe Lagerstabilität aufweisen und trotzdem über ausreichende mechanische Eigenschaften verfügen.

### Darstellung der Erfindung

Aufgabe der vorliegenden Erfindung ist es daher, hitzehärtende Epoxidharzzusammensetzungen zur Verfügung zu stellen, welche einerseits eine hohe Lagerstabilität aufweisen und trotzdem über ausreichende mechanische Eigenschaften verfügen.

Diese Aufgabe konnte überraschenderweise durch eine hitzehärtende Epoxidharzzusammensetzung gemäss Anspruch 1 gelöst werden. Diese Epoxidharzzusammensetzung lassen sich besonders gut als einkomponentiger hitzehärtender Klebstoff, insbesondere als hitzehärtender einkomponentiger Rohbauklebstoff im Fahrzeugbau, sowie zur Herstellung eines Strukturschaums für die Verstärkung von Hohlräumen, insbesondere von metallischen Strukturen, verwenden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft einkomponentige hitzehärtende Epoxidharzzusammensetzungen, umfassend
a) mindestens ein Epoxidharz **A** mit durchschnittlich mehr als einer Epoxidgruppe pro Molekül;
b) mindestens einen latenten Härter für Epoxidharze **B**;
c) mindestens eine Verbindung der Formel 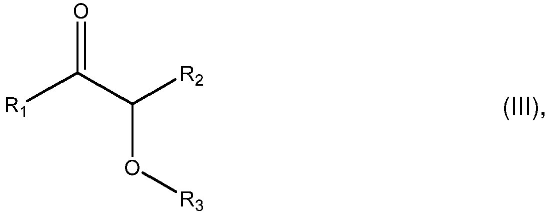 wobei die Substituenten R₁ und R₂ unabhängig voneinander für ein unsubstituiertes Benzol, ein halogeniertes Benzol, alkoxyliertes Benzol, ein alkyliertes Benzol oder ein N-Derivat eines Anilins stehen; und
   wobei der Substituent R₃ für H oder eine Alkylgruppe mit 1 bis 10 Kohlenstoffatomen steht.

Das Gewichtsverhältnis des mindestens einen Epoxidharz **A** mit durchschnittlich mehr als einer Epoxidgruppe pro Molekül zu der mindestens einen Verbindung der Formel (III) beträgt von 5 - 800.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Unter einem "Zähigkeitsverbesserer" wird in diesem Dokument ein Zusatz zu einer Epoxidharzmatrix verstanden, der bereits bei geringen Zuschlägen von ≥ 5 Gew.-%, insbesondere ≥ 10 Gew.-%, bezogen auf das Gesamtgewicht der Epoxidharzzusammensetzungen, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "Raumtemperatur" wird im vorliegenden Dokument eine Temperatur von 23°C bezeichnet.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

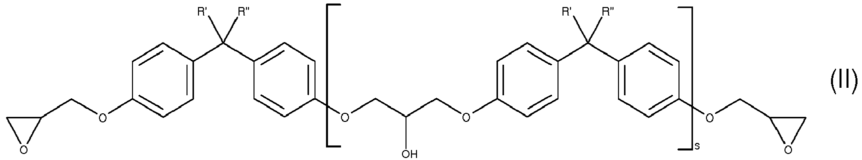

Hierbei stehen die Substituenten R' und R" unabhängig voneinander entweder für H oder CH₃.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Epoxid-Novolake. Diese weisen insbesondere die folgende Formel auf: 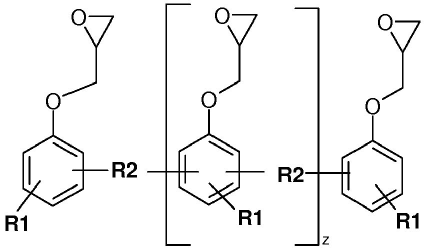 mit **R2**= 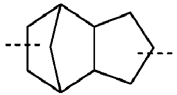 oder CH₂, R**1** = H oder Methyl und z = 0 bis 7.

Insbesondere handelt es sich hierbei um Phenol- oder Kresol-Epoxid-Novolake (**R2** = CH₂).

Solche Epoxidharze sind unter dem Handelnamen EPN oder ECN sowie Tactix® von Huntsman oder unter der Produktereihe D.E.N.™ von Dow Chemical kommerziell erhältlich.

Bevorzugt stellt das Epoxidharz **A** ein Epoxid-Flüssigharz der Formel (II) dar.

In einer besonders bevorzugten Ausführungsform enthält die hitzehärtende Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Der Anteil von Epoxidharzes **A** beträgt vorzugsweise 10 - 60 Gew.-%, insbesondere 30 - 50 Gew.-%, bezogen auf das Gesamtgewicht der Epoxidharzzusammensetzung.

Weiter ist es vorteilhaft, wenn es sich bei 50-100 Gew.-%, insbesondere 80-100 Gew.-%, des Epoxidharzes **A** um ein vorgenanntes Epoxid-Flüssigharz handelt.

Weiter ist es vorteilhaft, wenn es sich bei 0-30 Gew.-%, insbesondere 0-20 Gew.-%, besonders bevorzugt 5-15 Gew.-%, des Epoxidharzes A um ein vorgenanntes Epoxid-Festharz handelt.

Die hitzehärtende Epoxidharzzusammensetzung enthält mindestens eine Verbindung der Formel

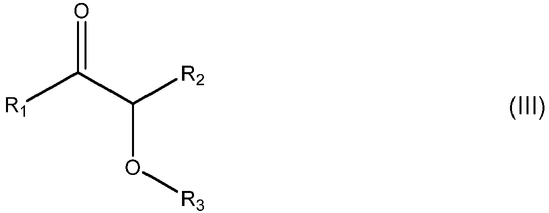

Hierbei stehen die Substituenten R₁ und R₂ unabhängig voneinander für ein unsubstituiertes Benzol (Benzen), ein halogeniertes Benzol, alkoxyliertes Benzol, ein alkyliertes Benzol oder ein N-Derivat eines Anilins.

Vorzugsweise stehen die Substituenten R₁ und R₂ unabhängig voneinander für ein unsubstituiertes Benzol; ein halogeniertes Benzol, insbesondere ein chloriertes Benzol; ein alkoxyliertes Benzol, insbesondere ein C₁-C₁₀ alkoxyliertes Benzol, insbesondere ein C₁-C₄ alkoxyliertes Benzol; ein alkyliertes Benzol, insbesondere ein C₁-C₁₀ alkyliertes Benzol, insbesondere ein C₁-C₄ alkyliertes Benzol. Am meisten bevorzugt stehen die Substituenten R₁ und R₂ für ein unsubstituiertes Benzol.

Bevorzugt sind die beiden Substituenten R₁ = R₂.

Der Substituent R₃ steht für H oder eine Alkylgruppe mit 1 bis 10 Kohlenstoffatomen, insbesondere H oder eine Alkylgruppe mit 1 bis 8 Kohlenstoffatomen, insbesondere H oder eine Alkylgruppe mit 1 bis 4 Kohlenstoffatomen, insbesondere bevorzugt für H.

Besonders bevorzugt handelt es sich um eine Verbindung der Formel (III), wobei es sich bei den Substituenten R₁ und R₂ jeweils um unsubstituiertes Benzol (Benzen) handelt und der Substituent R₃ für H oder eine Alkylgruppe mit 1 bis 4 Kohlenstoffatomen, insbesondere bevorzugt für H steht.

Vorzugsweise ist die Verbindung der Formel (III) ausgewählt aus der Liste bestehend aus:
Benzoin (α-Hydroxy-α-phenylacetophenon, 2-Hydroxy-1,2-diphenylethanon), 4-Chlorobenzoin, 4,4'-Dimethoxybenzoin Benzoinmethylether, Benzoinethylether, Benzoinisopropylether, Benzoinisobutylether, 1,2-bis(4-dimethylaminophenyl)-2-hydroxyethanon und N-(4-{2-[4-(acetylamino)phenyl]-2-hydroxyacetyl}phenyl)acetamid,
besonders bevorzugt ausgewählt aus der Liste bestehend aus:
   Benzoin, Benzoinmethylether, Benzoinethylether, Benzoinisopropylether, und Benzoinisobutylether,
   am meisten bevorzugt handelt es sich um Benzoin.

Vorzugsweise beträgt der Anteil der mindestens einen Verbindung der Formel (III) von 0.1 Gew.-% - 15 Gew.-%, insbesondere von 0.5 Gew.-% - 10 Gew.-%, insbesondere von 1 Gew.-% - 8 Gew.-%, insbesondere von 1.5 Gew.-% - 5 Gew.-%, insbesondere bevorzugt von 1.5 Gew.-% - 3 Gew.-%, bezogen auf das Gesamtgewicht der einkomponentigen hitzehärtenden Epoxidharzzusammensetzung. Dies ist dahingehend von Vorteil, dass dies zu sehr guten Werten in der Lagerstabilität führt. Dies ist beispielsweise in den Tabellen 4 und 5 in den Beispielen 26 bis 36 ersichtlich.

Bei der einkomponentigen hitzehärtenden Epoxidharzzusammensetzung beträgt das Gewichtsverhältnis des mindestens einen Epoxidharz **A** mit durchschnittlich mehr als einer Epoxidgruppe pro Molekül zu der mindestens einen Verbindung der Formel (III) von 5 - 800.

Vorzugsweise beträgt das beträgt das Gewichtsverhältnis 10 - 600, insbesondere 10 - 400, 10 - 160, 10 - 100, 10 - 35, 15 - 35, besonderes bevorzugt 20 - 25. Dies ist einer guten Lagerstabilität und hohen Werten für die Zugscherfestigkeit zuträglich. Dies ist beispielsweise in Tabelle 6 aus den Beispielen 38 und 39 ersichtlich.

Weiter wurde überraschenderweise gefunden dass Zusammensetzungen mit einem Gewichtsverhältnis von 15 - 35, insbesondere 20 - 25, zu einer Verbesserung der Schlagschälfestigkeit/Impact peel bei 23°C führen. Dies ist beispielsweise im Vergleich von Beispiel 38 mit dem Beispiel 37 ersichtlich.

Beträgt das Gewichtsverhältnis 5 - 40, insbesondere 5 - 30, insbesondere 5 - 25, insbesondere 5 - 20, insbesondere 8 - 20, führt dies zu sehr guten Werten in der Lagerstabilität. Dies ist beispielsweise in den Tabellen 4 und 5 im Vergleich der Beispiele 26 bis 36 ersichtlich.

Die hitzehärtende Epoxidharzzusammensetzung enthält mindestens einen latenten Härter **B** für Epoxidharze. Dieser wird durch erhöhte Temperatur aktiviert, vorzugsweise bei Temperaturen von 70°C oder mehr.

Es handelt sich hierbei vorzugsweise um einen Härter, welcher ausgewählt ist aus der Gruppe bestehend aus Dicyandiamid; Guanamine, insbesondere Benzoguanamin; Guanidine; Anhydride von mehrwertigen Carbonsäuren, insbesondere 1 -Methyl-5-norbornen-2,3-dicarbonsäureanhydrid; Dihydrazide und Aminoguanidine.

Vorzugsweise ist der Härter **B** ausgewählt aus der Gruppe bestehend aus Guanidine, insbesondere Dicyandiamid; Anhydride von mehrwertigen Carbonsäuren, insbesondere 1-Methyl-5-norbornen-2,3-dicarbonsäureanhydrid und Dihydrazide.

Besonders bevorzugt ist der Härter **B** ausgewählt ist aus der Gruppe bestehend aus Guanidine, insbesondere Dicyandiamid, und Dihydrazide.

Besonders bevorzugt als Härter **B** ist Dicyandiamid.

Die Menge des latenten Härter **B** für Epoxidharze, beträgt vorteilhaft 0.1 - 30 Gew.-%, insbesondere 0.2 - 10 Gew.-%, bevorzugt 1 - 10 Gew.-%, insbesondere bevorzugt 5 - 10 Gew.-%, bezogen auf das Gewicht des Epoxidharzes **A.**

Vorzugsweise enthält die hitzehärtende Epoxidharzzusammensetzung zusätzlich mindestens einen Beschleuniger **C** für Epoxidharze. Solche beschleunigend wirksame Härter sind vorzugsweise substituierte Harnstoffe, wie beispielsweise 3-(3-Chlor-4-methylphenyl)-1,1-dimethylharnstoff (Chlortoluron) oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid, Imidazoline, Trihalogenid-Komplexe, bevorzugt BF₃-Komplexe, blockierte Amine und enkapsulierte Amine eingesetzt werden.

Vorzugsweise ist der Beschleuniger C für Epoxidharze ausgewählt aus der Liste bestehend aus substituierten Harnstoffen, Imidazolen, Imidazolinen und blockierten Aminen.

Besonders bevorzugt ist der Beschleuniger **C** für Epoxidharze ausgewählt aus der Liste bestehend aus substituierten Harnstoffen und blockierten Aminen, insbesondere wenn es sich bei dem latenten Härter **B** um ein Guanidine, insbesondere Dicyandiamid, handelt.

Ganz besonders bevorzugt handelt es sich bei dem latenten Härter **B** um ein Guanidin, insbesondere Dicyandiamid, und die einkomponentige hitzehärtende Epoxidharzzusammensetzung weist zusätzlich einen Beschleuniger **C** für Epoxidharze ausgewählt aus der Liste bestehend aus substituierten Harnstoffen und blockierten Aminen, insbesondere substituierten Harnstoffen, auf.

Dies ist einer signifikanten Verbesserung der Lagerstabilität zuträglich, wie in den Beispielen 9 - 15 in der Tabelle 2 ersichtlich ist. Überraschenderweise wurde gefunden, dass Verbindungen der Formel (III) insbesondere in Gegenwart von vorgenannten Beschleunigern C für Epoxidharze, zu einer starken Verbesserung der Lagerstabilität führen.

Vorzugsweise umfasst die einkomponentige hitzehärtende Epoxidharzzusammensetzung einen Beschleuniger **C** für Epoxidharze ausgewählt aus der Liste bestehend aus substituierten Harnstoffen und blockierten Aminen, sowie einen latenten Härter **B,** bei dem es sich um ein Guanidine, insbesondere Dicyandiamid, handelt, und das Gewichtsverhältnis des mindestens einen Epoxidharz **A** mit durchschnittlich mehr als einer Epoxidgruppe pro Molekül zu der mindestens einen Verbindung der Formel (III) beträgt von 20 - 400, insbesondere 25 - 160, besonderes bevorzugt 25 - 100. Dies ist einer guten Lagerstabilität zuträglich. Dies ist beispielsweise in Tabelle 2 aus den Beispielen 11 - 13 ersichtlich. Es wurde überraschenderweise gefunden das in Fällen mit starker Beeinträchtigung der Lagerstabilität aufgrund der Anwesenheit von Beschleunigern bereits eine geringe Menge der Verbindung der Formel (III) zu einer starken Verbesserung der Lagerstabilität führt.

Besonders bevorzugt als Beschleuniger **C** sind substituierte Harnstoffe.

Die Menge des Beschleunigers **C** beträgt vorteilhaft 0.1 - 30 Gew.-%, insbesondere 0.2 - 10 Gew.-%, bevorzugt 1 - 10 Gew.-%, insbesondere bevorzugt 5 - 10 Gew.-%, bezogen auf das Gewicht des Epoxidharzes **A.**

Vorzugsweise beträgt das Gewichtsverhältnis des mindestens einen latenten Härter für Epoxidharze **B** zu der mindestens einen Verbindung der Formel (III) von 0.5 - 8, insbesondere 0.5 - 7, insbesondere 0.5 - 3.5, insbesondere 0.5 - 2.5, besonderes bevorzugt 0.5 - 1.8. Dies ist dahingehend von Vorteil, dass dies zu sehr guten Werten in der Lagerstabilität führt. Dies ist beispielsweise in den Tabellen 4 und 5 in den Beispielen 26 bis 36 ersichtlich.

Die einkomponentige hitzehärtende Epoxidharzzusammensetzung enthält vorzugsweise mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1**, Flüssigkautschuken **D2** und Core-Shell-Polymeren **D3.** Bevorzugt ist der Zähigkeitsverbesserer **D** ausgewählt ist aus der Gruppe bestehend aus endständig blockierten Polyurethanpolymeren **D1** und Flüssigkautschuken **D2.** Besonders bevorzugt handelt es sich um ein endständig blockiertes Polyurethanpolymer **D1.**

Handelt es sich bei dem Zähigkeitsverbesserer **D** um ein endständig blockiertes Polyurethanpolymer **D1,** handelt es sich vorzugsweise um ein endständig blockiertes Polyurethanprepolymer der Formel (I).

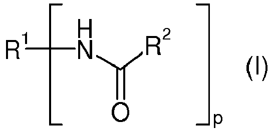

Hierbei steht R¹ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

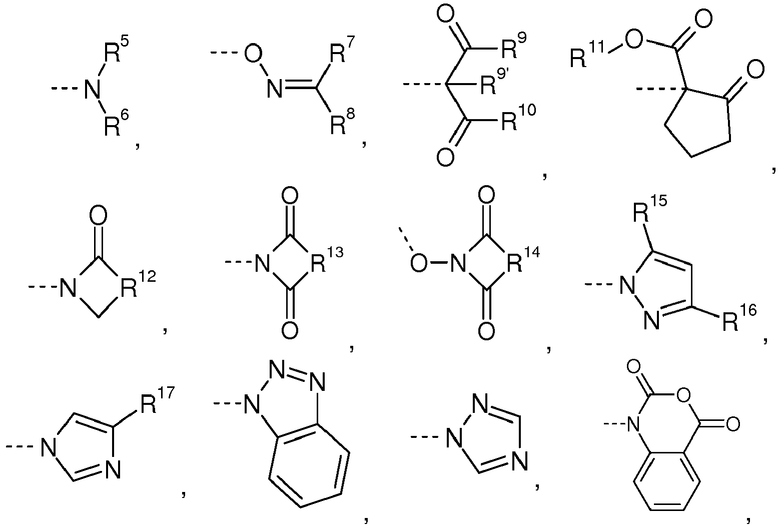

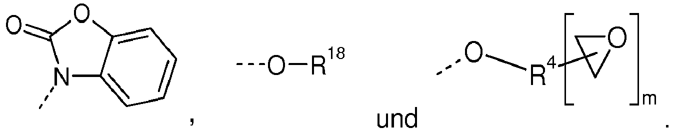

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher gegebenenfalls substituiert ist.

Weiterhin stehen R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A. Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln

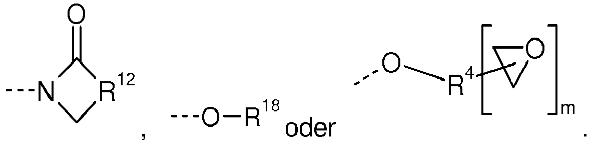

Als Substituent der Formel 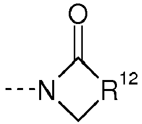 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt. Besonders bevorzugte Bespiele für derartigen Reste R² sind Reste, welche ausgewählt sind aus der Gruppe bestehend aus

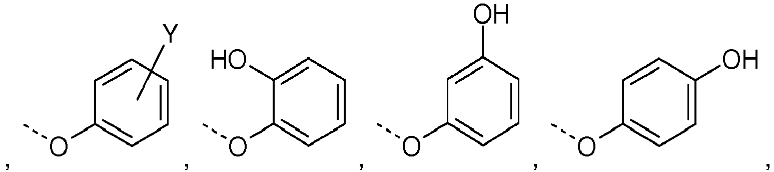

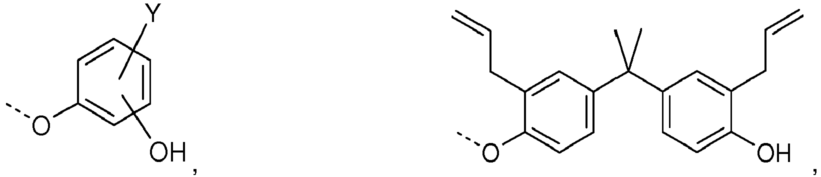

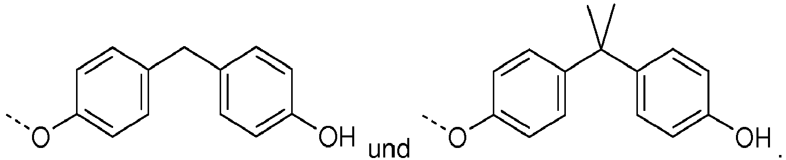

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, Carbonsäureester oder ein ungesättigter C₁₅-Alkylrest mit 1 bis 3 Doppelbindungen bevorzugt.

Meist bevorzugt steht R² für ---O-R¹⁸.

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppen, auf dem R¹ basiert, lässt sich aus mindestens einem Diisocyanat oder Triisocyanat sowie aus einem Polymeren **Q**_{PM} mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆-Alkylen-gruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

In einer bevorzugten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Bei dem Zähigkeitsverbesserer D kann es sich um einen Flüssigkautschuk **D2** handeln. Hierbei kann es sich z.B. um ein carboxyl- oder epoxidterminiertes Polymer handeln.

In einer ersten Ausführungsform kann dieser Flüssigkautschuk ein carboxyl- oder epoxidterminiertes Acrylnitril/Butadien-Copolymer oder ein Derivat davon sein. Derartige Flüssigkautschuke sind z.B. unter dem Namen Hypro / Hypox® CTBN und CTBNX und ETBN von Emerald Perfomance Materials, kommerziell erhältlich. Als Derivate sind insbesondere Epoxidgruppen aufweisende Elastomer-modifizierte Prepolymere, wie sie unter der Produktlinie Polydis®, insbesondere aus der Produktelinie Polydis® 36.., von der Firma Struktol® (Schill+Seilacher Gruppe, Deutschland) oder unter der Produktlinie Albipox (Evonik, Deutschland) kommerziell vertrieben werden, geeignet.

In einer zweiten Ausführungsform kann dieser Flüssigkautschuk ein Polyacrylatflüssigkautschuk sein, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow erhältlich.

Es können natürlich auch Mischungen von Flüssigkautschuken verwendet werden, insbesondere Mischungen von carboxyl- oder epoxidterminierten Acrylnitril/Butadien-Copolymeren oder von Derivaten davon.

Der Zähigkeitsverbesserer **D** kann in einer dritten Ausführungsform ein Core-Shell Polymer **D3** sein. Core-Shell-Polymere bestehen aus einem elastischen Kernpolymer und einem starren Schalen-Polymer. Besonders geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Arkema, Paraloid™ von Dow oder F-351™ von Zeon erhältlich sind.

Vorzugsweise beträgt der Anteil an Zähigkeitsverbesserer **D** von 5 - 50 Gew.-%, 10 - 40 Gew.-%, 15 - 30 Gew.-%, besonders bevorzugt 20 - 30 Gew.-%, bezogen auf das Gesamtgewicht der Epoxidharzzusammensetzung.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente.

Besonders bevorzugt handelt es sich um Füllstoffe ausgewählt aus der Gruppe bestehend aus Wollastonit, Calciumcarbonat, Farbpigmenten, insbesondere Russ, und pyrogene Kieselsäuren.

Besonders bevorzugt handelt es sich um Füllstoffe ausgewählt aus der Gruppe bestehend aus Farbpigmenten, insbesondere Russ, und pyrogene Kieselsäuren.

Am meisten bevorzugt handelt es sich um pyrogene Kieselsäuren.

Der Effekt der Füllstoffe **F** auf die Verbesserung der Lagerstabilität ist in den Beispielen 16 - 25 in der Tabelle 3 ersichtlich. Überraschenderweise wurde gefunden, dass Verbindungen der Formel (III) insbesondere in Gegenwart von Farbpigmenten, insbesondere Russ, und pyrogener Kieselsäure zu einer starken Verbesserung der Lagerstabilität führen.

Vorteilhaft beträgt der Gesamtanteil des gesamten Füllstoffs **F** 5 - 40 Gewichts-%, vorzugsweise 10 - 30 Gewichts-%, bezogen auf das Gesamtgewicht der Epoxidharzzusammensetzung.

In einer weiteren bevorzugten Ausführungsform kann die Zusammensetzung ein physikalisches oder chemisches Treibmittel enthalten, wie es beispielsweise unter dem Handelsnamen Expancel™ der Firma Akzo Nobel oder Celogen™ der Firma Chemtura oder unter dem Handelsnamen Luvopor® von Lehmann & Voss erhältlich ist. Der Anteil des Treibmittels beträgt vorteilhaft 0.1 - 3 Gew.-%, bezogen auf Gesamtgewicht der Epoxidharzzusammensetzung.

In einer weiteren bevorzugten Ausführungsform enthält die Zusammensetzung zusätzlich mindestens einen Epoxidgruppen-tragenden Reaktivverdünner **G.** Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidyl-ether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Eine besonders bevorzugte einkomponentige Epoxidharzzusammensetzung umfasst:
- 10 - 60 Gew.-%, insbesondere 30 - 50 Gew.-%, bezogen auf das Gesamtgewicht der Epoxidharzzusammensetzung, Epoxidharz **A** mit durchschnittlich mehr als einer Epoxidgruppe pro Molekül; vorzugsweise handelt es sich bei 50-100 Gew.-%, insbesondere 80-100 Gew.-%, des Epoxidharzes **A** um ein Epoxid-Flüssigharz und bei 0-30 Gew.-%, insbesondere 0-20 Gew.-%, besonders bevorzugt 5-15 Gew.-%, des Epoxidharzes **A** um ein Epoxid-Festharz;.
- mindestens einen latenten Härter für Epoxidharze **B**, vorzugsweise ausgewählt aus Dicyandiamid, Guanaminen, Guanidinen, Anhydriden von mehrwertigen Carbonsäuren, Dihydraziden, und Aminoguanidinen, sowie deren Derivaten, wobei Dicyandiamid bevorzugt ist;
- vorzugsweise mindestens einen Beschleuniger **C**, ausgewählt aus der Liste bestehend aus substituierten Harnstoffen, Imidazolen, Imidazolinen und blockierten Aminen, insbesondere ausgewählt ist aus der Liste bestehend aus substituierten Harnstoffen und blockierten Aminen, insbesondere bevorzugt substituierten Harnstoffen;
- mindestens einen Zähigkeitsverbesserer **D**, ausgewählt ist aus der Gruppe bestehend aus endständig blockierten Polyurethanpolymeren **D1**, Flüssigkautschuken **D2** und Core-Shell-Polymeren **D3**, vorzugsweise beträgt dabei der Anteil an Zähigkeitsverbesserer **D** 5 - 50 Gew.-%, 10 -40 Gew.-%, 15 -30 Gew.-%, besonders bevorzugt 20 -30 Gew.-%, bezogen auf das Gesamtgewicht der Epoxidharzzusammensetzung;
- vorzugsweise 5 - 40 Gewichts-%, vorzugsweise 10 - 30 Gewichts-%, bezogen auf das Gesamtgewicht der Epoxidharzzusammensetzung, von einem Füllstoffe **F** ausgewählt vorzugsweise aus der Gruppe bestehend aus Wollastonit, Calciumcarbonat, Farbpigmenten, insbesondere Russ, und pyrogene Kieselsäuren, insbesondere Farbpigmenten, insbesondere Russ, und pyrogene Kieselsäuren, besonders bevorzugt pyrogene Kieselsäuren;
- vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einen Epoxidgruppen-tragenden Reaktivverdünner **G**;
- wobei
das Gewichtsverhältnis des mindestens einen Epoxidharz **A** mit durchschnittlich mehr als einer Epoxidgruppe pro Molekül zu der mindestens einen Verbindung der Formel (III) von 10 - 600, insbesondere 10 - 400, 10 - 160, 10 - 100, 10 - 35, 15 - 35, besonderes bevorzugt 20 - 25, beträgt.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Ein Beispiel einer besonders bevorzugten Zusammensetzung ist beispielsweise Beispiel 38 in Tabelle 6.

Weiter kann es vorteilhaft sein, wenn die erfindungsgemässen Zusammensetzungen weniger als 2 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, an

Wärme-Polymerisationsstartern, insbesondere organische Peroxide und Azoverbindungen, aufweist, bezogen auf das Gesamtgewicht der Epoxidharzzusammensetzung.

Weiter kann es vorteilhaft sein, wenn die erfindungsgemässen Zusammensetzungen weniger als 5 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, an (Meth)Acrylatverbindungen, insbesondere Acrylat-Monomere, Methacrylate-Monomere sowie Polyacrylat-Polymere, aufweisen, bezogen auf das Gesamtgewicht der Epoxidharzzusammensetzung.

Weiter kann es vorteilhaft sein, wenn die erfindungsgemässen Zusammensetzungen weniger als 2 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, an Photo-Polymerisationsstartern aufweisen, bezogen auf das Gesamtgewicht der Epoxidharzzusammensetzung.

Diese Photo-Polymerisationsstarter sind ausgewält aus der Liste bestehend aus, aromatischen Sulfonylchloriden; photoaktiven Oximen; Acetophenone, wie Acetophenon, 2,2-Dimethoxy-2-phenylacetophenon, 1,1-Dichloraceto-phenon und 4-(1-t-Butyldioxy-1-methylethyl)acetophenon; Anthrachinone, wie 2-Methylanthrachinon, 2-Amylanthrachinon, 2-t-Butylanthrachinon und 1-Chloranthrachinon; Thioxanthone, wie 2,4-Dimethylthioxanthon, 2,4-Diisopro-pylthioxanthon und 2-Chlorthioxanthon; Ketale, wie Acetophenondimethyl-ketal und Benzyldimethylketal, Benzophenone, wie Benzophenon, 4-(1-t-Butyl-dioxy-1-methylethyl)benzophenon, 3,3',4,4'-Tetrakis(t-butyldioxycarbonyl)-benzophenon, 2-Methyl-1-[(4-methylthio)phenyl]-2-morpholinopropan-1-on und 2-Benzyl-2-dimethylamino-1-(4-morpholinophenyl)butanon-1, Acylphosphinoxide und Xanthone.

Es ist vorteilhaft, wenn die erfindungsgemässe Epoxidharzzusammensetzung eine Viskosität bei 25°C von 500 - 3000 Pa*s, insbesondere 1000 - 2500 Pa*s, vorzugsweise 1000 - 2000 Pa*s, aufweist. Dies ist dahingehend von Vorteil, dass dadurch eine gute Applizierbarkeit gewährleistet ist. Vorzugsweise wird die Viskosität gemessen wie in dem Beispielteil beschrieben.

Auch ist es von Vorteil, wenn bei der erfindungsgemässen Epoxidharzzusammensetzung die Viskosität gemessen bei einer Messtemperatur von 25°C, nach einer Lagerung von 1 Woche bei 60°C einen Tag nach Herstellung, um weniger als 200%, weniger als 150%, weniger als 120%, weniger als 100%, weniger als 50%, ansteigt.

Besonders bevorzugt handelt es sich um hitzehärtende Epoxidharzzusammensetzungen, welche im ausgehärteten Zustand:
- eine Zugscherfestigkeit, insbesondere gemessen nach DIN EN 1465, besonders bevorzugt wie in dem Beispielteil beschrieben, von mehr als 10 MPa, mehr als 15 MPa, mehr als 20 MPa, aufweisen, und/oder
- eine Zugfestigkeit, insbesondere gemessen nach DIN EN ISO 527, besonders bevorzugt wie in dem Beispielteil beschrieben, von mehr als 10 MPa, mehr als 15 MPa, mehr als 20 MPa, aufweisen, und/oder
- eine Bruchdehnung, insbesondere gemessen nach DIN EN ISO 527, besonders bevorzugt wie in dem Beispielteil beschrieben, von 1 - 30%, 2 - 20%, 3 - 10%, aufweisen, und/oder
- ein E-Modul, insbesondere gemessen nach DIN EN ISO 527, besonders bevorzugt wie in dem Beispielteil beschrieben, von 300 - 2000 MPa, vorzugsweise 1000 - 2000 MPa, aufweisen.

Vorzugsweise ist die erfindungsgemässe hitzehärtende Epoxidharzzusammensetzung nicht zu einer Aushärtung mittels radikalischer Polymerisationreaktionen befähigt, insbesondere radikalischer Polymerisationreaktionen induziert durch UV/Licht oder radikalischer Polymerisationreaktionen induziert durch Wärme.

Es hat sich gezeigt, dass sich die beschriebenen hitzehärtenden Epoxidharzzusammensetzungen besonders zur Verwendung als einkomponentige hitzehärtende Klebstoffe, insbesondere als hitzehärtender einkomponentiger Klebstoff im Fahrzeugbau und Sandwichpanelbau, eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und bei tiefen Temperaturen auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Ein solcher Klebstoff wird insbesondere zuerst mit den zu verklebenden Materialien bei einer Temperatur von zwischen 10°C und 80°C, insbesondere zwischen 10°C und 60°C, kontaktiert und später ausgehärtet bei einer Temperatur von typischerweise 100 - 220°C, vorzugsweise 120 - 200°C.

Ein weiterer Aspekt der vorliegenden Erfindung betrifft ein Verfahren zur Verklebung von hitzestabilen Substraten, welches die Schritte umfasst:
i) Applizieren einer hitzehärtenden Epoxidharzzusammensetzung, wie sie vorgängig im Detail beschrieben wurde, auf die Oberfläche eines hitzestabilen Substrates **S1**, insbesondere eines Metalls;
ii) Kontaktieren der applizierten hitzehärtenden Epoxidharzzusammensetzung mit der Oberfläche eines weiteren hitzestabilen Substrates **S2**, insbesondere eines Metalls;
iii) Erhitzen der Zusammensetzung auf eine Temperatur von 100 - 220°C, insbesondere von 120 - 200°C.

Das Substrat **S2** besteht hierbei aus dem gleichen oder einem unterschiedlichen Material wie das Substrat **S1.**

Die Substrate **S1** und/oder **S2** sind insbesondere die vorgängig erwähnten Metalle und Kunststoffe.

Vorzugsweise wird in dem Schritt iii) Erhitzen der Zusammensetzung auf eine Temperatur von 100 - 220°C, insbesondere von 120 - 200°C, die Zusammensetzung für 10 min - 6 h, 10 min - 2 h, 10 min - 60 min, 20 min - 60 min, bei der vorgenannten Temperatur belassen.

Vorzugsweise weist das Verfahren keinen Schritt umfassend einer radikalischen Polymerisation der hitzehärtenden Epoxidharzzusammensetzung auf. Vorzugsweise weist das Verfahren keinen Schritt einer radikalischen Polymerisationreaktion induziert durch UV/Licht oder radikalischen Polymerisationreaktionen induziert durch Wärme auf.

Aus einem derartigen Verfahren zum Verkleben von hitzestabilen Materialien resultiert ein verklebter Artikel. Ein derartiger Artikel ist vorzugsweise ein Fahrzeug oder ein Teil eines Fahrzeugs.

Einen weiteren Aspekt der vorliegenden Erfindung betrifft daher ein verklebter Artikel erhalten aus dem vorgenannten Verfahren. Selbstverständlich können mit einer erfindungsgemässen Zusammensetzung neben hitzehärtenden Klebstoffen auch Dichtmassen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender einkomponentiger Rohbauklebstoff im Fahrzeugbau oder als Versteifungsmasse oder als schäumbare, hitzehärtende Zusammensetzung für die Verstärkung in Hohlräumen von strukturellen Bauteilen und Verstärkungselementen.

Einen weiteren Aspekt der vorliegenden Erfindung betrifft eine ausgehärtete Epoxidharzzusammensetzung, wie sie durch Erhitzen einer hitzehärtenden Epoxidharzzusammensetzung wie sie vorgängig im Detail beschrieben wurde, erhalten wird. Die Erhitzung erfolgt typischerweise in einem Ofen bei einer Temperatur von 100 - 220°C, bevorzugt zwischen 120 und 200°C, vorzugsweise für 10 min - 6 h, 10 min - 2 h, 10 min - 60 min, 20 min - 60 min, bei der vorgenannten Temperatur.

Weiterhin umfasst die Erfindung die Verwendung mindestens einer Verbindung der Formel (III), wie sie vorgehend beschrieben sind, zur Erhöhung der Lagerstabilität einer einkomponentigen hitzehärtenden Epoxidharzzusammensetzung, insbesondere eines hitzehärtenden Epoxidharzklebstoffs, vorzugsweise im Fahrzeugbau und Sandwichpanelbau. Vorzugsweise handelt es sich um eine hitzehärtende Epoxidharzzusammensetzung wie sie vorgehend beschrieben wurde.

Die Erhöhung der Lagerstabilität bezieht sich auf den Vergleich zu einkomponentigen hitzehärtenden Epoxidharzzusammensetzungen welche keine der vorgehend erwähnten Verbindung der Formel (III) enthalten.

Die Lagerstabilität wird vorzugsweise durch Viskositätsmessungen der einkomponentigen hitzehärtenden Epoxidharzzusammensetzung bestimmt, insbesondere aufgrund der Ermittlung des sich nach einer Lagerung ergebende prozentualen Viskositätsanstiegs.

Vorzugsweise handelt es sich um den prozentualen Viskositätsanstieg nach einer Lagerung für 1 Woche bei 60°C, insbesondere werden die Viskositätsmessungen vor und nach der Lagerung jeweils bei einer Temperatur von 25°C durchgeführt.

Besonders bevorzugt wird der sich nach einer Lagerung ergebende prozentuale Viskositätsanstieg folgendermassen bestimmt. Die Ausgangsviskosität wird einen Tag nach Herstellung der einkomponentigen hitzehärtenden Epoxidharzzusammensetzung auf einem Rheometer vom Typ MCR 302 des Herstellers Anton Paar oszillatorisch unter Verwendung einer Platten-Platten Geometrie bei einer Temperatur von 25°C mit folgenden Parametern bestimmt: 5 Hz, 1 mm Spalt, Plattendurchmesser 25 mm, 1% Deformation.

Zur Bewertung der Lagerstabilität der Klebstoffe wird die Viskositätsmessung nach einer Lagerung für 1 Woche bei 60°C wiederholt und der sich nach der Lagerung ergebende prozentuale Viskositätsanstieg ermittelt. Die Viskositätsmessungen vor und nach der Lagerung werden jeweils bei einer Temperatur von 25°C durchgeführt.

Vorzugsweise beträgt die Art und Menge der eingesetzten mindestens einen Verbindung der Formel (III) der vorgehend beschriebenen Art und Menge, insbesondere werden auch die vorgehend als bevorzugt ausgewiesenen Arten und Mengen bevorzugt eingesetzt.

Vorzugsweise beträgt:
- das Gewichtsverhältnis des mindestens einen Epoxidharz **A** mit durchschnittlich mehr als einer Epoxidgruppe pro Molekül zu der mindestens einen Verbindung der Formel (III);
- das Gewichtsverhältnis des mindestens einen latenten Härter für Epoxidharze **B** zu der mindestens einen Verbindung der Formel (III);
- der Anteil der mindestens einen Verbindung der Formel (III), bezogen auf das Gesamtgewicht der einkomponentigen hitzehärtenden Epoxidharzzusammensetzung;
die vorgehend in Bezug auf die erfindungsgemässe einkomponentige hitzehärtende Epoxidharzzusammensetzung als bevorzugt ausgewiesenen Werte.

Weiter ist die Verwendung der mindestens einer Verbindung der Formel (III) insbesondere in einkomponentigen hitzehärtenden Epoxidharzzusammensetzungen bevorzugt, bei welchen es sich bei dem latenten Härter **B** um ein Guanidin, insbesondere Dicyandiamid, handelt und der Beschleuniger **C** für Epoxidharze ausgewählt ist aus der Liste bestehend aus substituierten Harnstoffen und blockierten Aminen, insbesondere substituierten Harnstoffen.

Vorzugsweise beträgt bei der erfindungsgemässen Verwendung der nach einer Lagerung für 1 Woche bei 60°C ergebende prozentuale Viskositätsanstieg, verglichen mit einer einkomponentigen hitzehärtenden Epoxidharzzusammensetzung, welche keine der vorgehend erwähnten Verbindung der Formel (III) enthält, weniger als 20%, weniger als 30%, insbesondere weniger als 40%, weniger als 50%, insbesondere bevorzugt weniger als 75%, besonders bevorzugt weniger als 90% des prozentualen Viskositätsanstieg einer einkomponentigen hitzehärtenden Epoxidharzzusammensetzung, welche keine der vorgehend erwähnten Verbindung der Formel (III) enthält.

### Beispiele

Im Folgenden werden einige Beispiele aufgeführt, welche die Erfindung weiter veranschaulichen, den Umfang der Erfindung aber in keiner Weise beschränken sollen.

### Herstellung eines Zähigkeitsverbesserers ("D-1")

150 g Poly-THF 2000 (OH-Zahl 57 mg/g KOH) und 150 g PolyBD R45V (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer **D-1** verwendet.

| A-Harz flüssig | Epoxid-Flüssigharz, D.E.R. 331 (Bisphenol-A-diglycidylether), Dow |
|---|---|
| Reaktivver dünner | Hexandiol-glycidylether, Denacol EX-212, Nagase America |
| B-1 | Dicyandiamid (= "*Dicy*") |
| B-2 | Dihydrazid, MAI, Otsuka Chemicals Co., Japan |
| B-3 | Guanamin, Benzoguanamin, AlzChem |
| B-4 | Anhydrid, 1-Methyl-5-norbornen-2,3-dicarbonsäureanhydrid, Aradur HY 906, Huntsman |
| C-1 | Substituierter Harnstoff |
| C-2 | Blockiertes Amin, Amin/Epoxy-Addukt, Ancamine 2014 FG, Evonik |
| F-1 | Pyrogene Kieselsäure, Aerosil® R202, Evonik |
| F-2 | Schichtsilikat, Garamite 1958, BYK |
| F-3 | Calciumcarbonat, Omyacarb®, Omya |
| F-4 | Wollastonit, Nyglos 4W, Imerys |
| F-5 | Russ, Monarch, Cabot |
| Benzoin | Benzoin, Sigma Aldrich |
| | Poly-THF 2000 (Difunktionelles Polybutylenglykol) (OH-Equivalentgewicht = ca. 1000 g/OH-Equivalent), BASF |
| | PolyBD R45V (Hydroxylterminertes Polybutadien) (OH-Equivalentgewicht = ca. 1230 g/OH-Equivalent), Cray Valley |
| | Isophoron-diisocyanat (= "IPDI"), Evonik |
| | Cardolite NC-700 (Cardanol, meta-substituiertes Alkenyl-mono-Phenol), Cardolite |

| | |
|---|---|
| eingesetzte Rohstoffe. | |

### Herstellung der Zusammensetzungen

Es wurden gemäss Angaben in den Tabellen 1-6 die Zusammensetzungen ***1 - 39*** hergestellt.

### Prüfmethoden:

### Zugfestigkeit (ZF), Bruchdehnung und E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm wurden ausgestanzt. Die Prüfkörper wurden unter Normklima mit einer Zuggeschwindigkeit von 2 mm/min gemessen. Die Zugfestigkeit (ZF), Bruchdehnung und das E-Modul 0,05-0,25%, wurden gemäss DIN EN ISO 527 bestimmt.

### Zugscherfestigkeit (ZSF) (DIN EN 1465)

Gereinigte und mit Anticorit PL 3802-39S rückbeölte Prüfbleche von Stahl Elo H420 (Dicke 1,2mm) wurden auf einer Klebfläche von 25 x 10 mm mit Glaskugeln als Abstandshalter in einer Schichtdicke von 0,3 mm mit dem Klebstoff verklebt und für 10 min bei 140°C Ofentemperatur ausgehärtet. Auf der Oberfläche des Prüfkörpers (Substratoberfläche) war jeweils eine Temperatursonde befestigt. Das Erreichen der angegebenen Temperatur auf 1 °C genau war jeweils der Beginn der Messung der Aushärtungszeit.

Die Zugscherfestigkeit wurde auf einer Zugmaschine bei einer Zuggeschwindigkeit von 10mm/min in einer 3-fach Bestimmung gemäss DIN EN 1465 bestimmt.

### Schlagschälfestigkeit/Impact peel (I-Peel) (gemäss ISO 11343)

Die Probenkörper wurden mit dem Klebstoff und Stahl DC04+ZE mit dem Mass 90 x 20 x 0,8 mm hergestellt. Dabei betrug die Klebfläche 20 x 60 mm bei einer Schichtdicke von 0,3 mm und Glaskugeln als Abstandshalter. Die Proben wurden für 10 min bei 140°C Ofentemperatur ausgehärtet. Auf der Oberfläche des Prüfkörpers (Substratoberfläche) war jeweils eine Temperatursonde befestigt. Das Erreichen der angegebenen Temperatur auf 1 °C genau war jeweils der Beginn der Messung der Aushärtungszeit.

Die Messung der Schlagschälfestigkeit erfolgte jeweils bei den angegebenen Temperaturen (23°C, -30°C) als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Winkelschälfestiakeit (T-Peel) (DIN 53281)

Es wurden Prüfbleche a 130 x 25 mm aus Stahl DC-04+ZE (Dicke 0,8mm) präpariert. Prüfbleche wurden auf einer Höhe von 30 mm mit einer geeigneten Stanzmaschine abgewickelt (90°). Die gereinigten und mit Anticorit PL 3802-39S rückbeölten Flächen von 100 x 25 mm wurden mit Glaskugeln als Abstandshalter in einer Schichtdicke von 0,3 mm mit dem Klebstoff verklebt und für 10 min bei 140°C Ofentemperatur ausgehärtet. Auf der Oberfläche des Prüfkörpers (Substratoberfläche) war jeweils eine Temperatursonde befestigt. Das Erreichen der angegebenen Temperatur auf 1°C genau war jeweils der Beginn der Messung der Aushärtungszeit. Die Winkelschälfestigkeit wurde auf einer Zugmaschine mit einer Zuggeschwindigkeit von 100 mm/min in einer 3-fach Bestimmung als Schälkraft in N/mm im Bereich des Traversenweges von 1/6-bis 5/6 Weglänge bestimmt.

### Viskosität/Lagerstabilität Klebstoffe

Viskositätsmessungen an den Klebstoffen erfolgten einen Tag nach Herstellung auf einem Rheometer vom Typ MCR 302 des Herstellers Anton Paar oszillatorisch unter Verwendung einer Platten-Platten Geometrie bei einer Temperatur von 25°C bzw. 50°C mit folgenden Parametern: 5 Hz, 1 mm Spalt, Plattendurchmesser 25 mm, 1% Deformation.

Zur Bewertung der Lagerstabilität der Klebstoffe wurde die Viskositätsmessung nach Lagerung bei der angegebenen Temperatur (60°C) für eine angegebene Zeit in Tagen (d) oder Wochen (W) wiederholt und der sich nach der Lagerung ergebende prozentuale Viskositätsanstieg ermittelt.

In den Tabellen beschreibt "A-Harz/Benzoin" das Gewichtsverhältnis des Epoxidharz **A** (A-Harz flüssig) zu der mindestens einen Verbindung der Formel (III) (Benzoin). "Härter/Benzoin" beschreibt das Gewichtsverhältnis des latenten Härters für Epoxidharze **B** zu der mindestens einen Verbindung der Formel (III) (Benzoin). "Gew-% Benzoin" beschreibt den Anteil der mindestens einen Verbindung der Formel (III) (Benzoin), bezogen auf das Gesamtgewicht der einkomponentigen hitzehärtenden Epoxidharzzusammensetzung

**Tabelle 1**

| | **1** | **2** | **3** | **4** | **5** | **6** | **7** | **8** |
|---|---|---|---|---|---|---|---|---|
| | Gew.-Teile | Gew.-Teile | Gew.-Teile | Gew.-Teile | Gew.-Teile | Gew.-Teile | Gew.-Teile | Gew.-Teile |
| A-Harz flüssig | 80 | 80 | 80 | 80 | 80 | 80 | 80 | 80 |
| F-1 | 7 | 7 | 7 | 7 | 7 | 7 | 7 | 7 |
| B-1 | 6.6 | 6.6 | | | | | | |
| B-2 | | | 6.6 | 6.6 | | | | |
| B-3 | | | | | 20.2 | 20.2 | | |
| B-4 | | | | | | | 30.8 | 30.8 |
| Benzoin | 0 | 4 | 0 | 4 | 0 | 4 | 0 | 4 |
| Summe | 93.6 | 97.6 | 93.6 | 97.6 | 93.6 | 111.2 | 93.6 | 121.8 |
| A-Harz/Benzoin | - | 20.0 | - | 20.0 | - | 20.0 | - | 20.0 |
| Härter/Benzoin | - | 1.7 | - | 1.7 | - | 5.1 | - | 7.7 |
| Gew-% Benzoin | - | 4.1 | - | 4.1 | - | 3.6 | - | 3.3 |
| 1 W 60°C (%) | 11 | 0 | 22 | 0 | 30 | 8 | 23 | 1 |

**Tabelle 2, n.b. = nicht bestimmt**

| | **9** | **10** | **11** | **12** | **13** | **14** | **15** |
|---|---|---|---|---|---|---|---|
| | Gew.-Teile | Gew.-Teile | Gew.-Teile | Gew.-Teile | Gew.-Teile | Gew.-Teile | Gew.-Teile |
| A-Harz flüssig | 80 | 80 | 80 | 80 | 80 | 80 | 80 |
| F-1 | 7 | 7 | 7 | 7 | 7 | 7 | 7 |
| B-1 | 6.6 | 6.6 | 6.6 | 6.6 | 6.6 | 6.6 | 6.6 |
| C-1 | | | 0.4 | 0.4 | 0.4 | | |
| C-2 | | | | | | 7.4 | 7.4 |
| Benzoin | 0 | 4 | 0 | 1 | 4 | 0 | 4 |
| Summe | 93.6 | 97.6 | 94 | 95 | 98 | 101 | 105 |
| A-Harz/Benzoin | - | 20.0 | - | 80.0 | 20.0 | - | 20.0 |
| Härter/Benzoin | - | 1.7 | - | 6.6 | 1.7 | - | 1.7 |
| Gew-% Benzoin | - | 4.1 | - | 1.1 | 4.1 | - | 3.8 |
| **1** W 60°C (%) | 11 | 0 | 8686 | 544 | 407 | n.b | n.b. |
| 1 d 60°C (%) | n.b | n.b | n.b | n.b | n.b | 24 | 0 |

**Tabelle 3, n.b. = nicht bestimmt**

| | **16** | **17** | **18** | **19** | **20** | **21** | **22** | **23** | **24** | **25** |
|---|---|---|---|---|---|---|---|---|---|---|
| | Gew.-Teile | Gew.-Teile | Gew.-Teile | Gew.-Teile | Gew.-Teile | Gew.-Teile | Gew.-Teile | Gew.-Teile | Gew.-Teile | Gew.-Teile |
| A-Harz flüssig | 80 | 80 | 80 | 80 | 80 | 80 | 80 | 80 | 80 | 80 |
| F-1 | 7 | 7 | | | | | | | | |
| F-2 | | | 5 | 5 | | | | | | |
| F-3 | | | | | 40 | 40 | | | | |
| F-4 | | | | | | | 10 | 10 | | |
| F-5 | | | | | | | | | 10 | 10 |
| B-1 | 6.6 | 6.6 | 6.6 | 6.6 | 6.6 | 6.6 | 6.6 | 6.6 | 6.6 | 6.6 |
| Benzoin | 0 | 4 | 0 | 4 | 0 | 4 | 0 | 4 | 0 | 4 |
| A-Harz/Benzoin | 0 | 20.0 | 0 | 20.0 | 0 | 20.0 | 0 | 20.0 | 0 | 20.0 |
| Härter/Benzoin | - | 1.7 | - | 1.7 | - | 1.7 | - | 1.7 | - | 1.7 |
| 1 W 60°C (%) | 11 | 0 | 4854 | 1219 | n.b. | n.b | n.b | n.b | n.b | n.b |
| 2 W 60°C (%) | n.b | n.b | n.b | n.b | 75 | 25 | 30 | 11 | 37 | 5 |

**Tabelle 4**

| | **26** | **27** | **28** | **29** | **30** | **31** |
|---|---|---|---|---|---|---|
| | Gew.-Teile | Gew.-Teile | Gew.-Teile | Gew.-Teile | Gew.-Teile | Gew.-Teile |
| A-Harz flüssig | 80 | 80 | 80 | 80 | 80 | 80 |
| F-1 | 7 | 7 | 7 | 7 | 7 | 7 |
| B-1 | 5.6 | 5.6 | 6.6 | 6.6 | 6.6 | 6.6 |
| Benzoin | 0 | 4 | 0 | 1 | 2 | 4 |
| Summe | 92.6 | 96.6 | 93.6 | 94.6 | 95.6 | 97.6 |
| A-Harz/Benzoin | - | 20.0 | - | 80.0 | 40.0 | 20.0 |
| Härter/Benzoin | - | 1.4 | - | 6.6 | 3.3 | 1.7 |
| Gew-% Benzoin | - | 4.1 | - | 1.1 | 2.1 | 4.1 |
| 1 W 60°C (%) | 11 | 0 | 11 | 8.8 | 7.1 | 0 |

**Tabelle 5**

| | **32** | **33** | **34** | **35** | **36** |
|---|---|---|---|---|---|
| | Gew.-Teile | Gew.-Teile | Gew.-Teile | Gew.-Teile | Gew.-Teile |
| A-Harz flüssig | 80 | 80 | 80 | 80 | 80 |
| F-1 | 7 | 7 | 7 | 7 | 7 |
| B-1 | 6.6 | 6.6 | 6.6 | 8.1 | 8.1 |
| Benzoin | 6 | 8 | 10 | 0 | 4 |
| Summe | 99.6 | 101.6 | 103.6 | 95.1 | 99.1 |
| A-Harz/Benzoin | 13.3 | 10.0 | 8.0 | - | 20.0 |
| Härter/Benzoin | 1.1 | 0.8 | 0.7 | - | 2.0 |
| Gew-% Benzoin | 6.0 | 7.9 | 9.7 | - | 4.0 |
| 1 W 60°C (%) | 0 | 0 | 0 | 20 | 3 |

**Tabelle 6**

| | | **37** | **38** | **39** |
|---|---|---|---|---|
| | | Gew.-% | Gew.-% | Gew.-% |
| A-Harz flüssig | | 46.75 | 45.78 | 44.85 |
| Reaktivverdünner | | 0.53 | 0.52 | 0.51 |
| D-1 | | 23.38 | 22.89 | 22.42 |
| B-1 | | 3.77 | 3.69 | 3.62 |
| C-2 | | 4.25 | 4.16 | 4.08 |
| Benzoin | | 0.00 | 2.08 | 4.08 |
| Mischung F1 und F3 | | 21.32 | 20.87 | 20.45 |
| Summe | | 100.00 | 100.00 | 100.00 |
| A-Harz/Benzoin | | - | 22.0 | 11.0 |
| Härter/Benzoin | | - | 1.8 | 0.9 |
| ZF (2 mm/min) [MPa] | | 27.5 | 25.0 | 22.6 |
| Bruchdehnung [%] | | 8.8 | 5.6 | 3.4 |
| E-Modul (0.05-0.25%)[MPa] | | 1470 | 1490 | 1480 |
| ZSF [MPa] | | 21.2 | 22.9 | 22.5 |
| I-Peel [N/mm] | 23°C | 22.6 | 23.0 | 21.2 |
| I-Peel [N/mm] | -30°C | 18.9 | 16.5 | 13.9 |
| T-Peel [N/mm] | | 6.5 | 6.0 | 5.5 |
| Rheologie, 1 d RT [Pa*s] | Viskosität 25°C | 1320 | 1300 | 1070 |
| Rheologie, 1 d RT [Pa*s] | Viskosität 50°C | 441 | 420 | 338 |
| Rheologie, 1 W 60°C [Pa*s] | Viskosität 25°C | 1980 (+50%) | 1730 (+33%) | 1360 (+27%) |
| Rheologie, 1 W 60°C [Pa*s] | Viskosität 50°C | 606 (+37%) | 519 (+24%) | 374 (+11%) |

## Patentansprüche

1. Einkomponentige hitzehärtende Epoxidharzzusammensetzung umfassend
a) mindestens ein Epoxidharz **A** mit durchschnittlich mehr als einer Epoxidgruppe pro Molekül;
b) mindestens einen latenten Härter für Epoxidharze **B**;
c) mindestens eine Verbindung der Formel 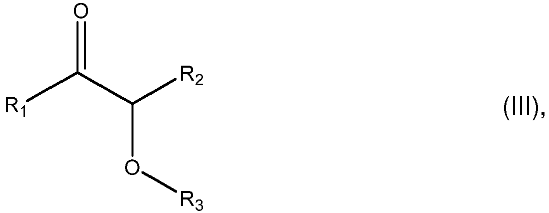 wobei die Substituenten R₁ und R₂ unabhängig voneinander für ein unsubstituiertes Benzol, ein halogeniertes Benzol, alkoxyliertes Benzol, ein alkyliertes Benzol oder ein N-Derivat eines Anilins stehen; und
wobei der Substituent R₃ für H oder eine Alkylgruppe mit 1 bis 10 Kohlenstoffatomen steht; und
wobei das Gewichtsverhältnis des mindestens einen Epoxidharz **A** mit durchschnittlich mehr als einer Epoxidgruppe pro Molekül zu der mindestens einen Verbindung der Formel (III) von 5 - 800 beträgt.

2. Einkomponentige hitzehärtende Epoxidharzzusammensetzung nach Anspruch 1, wobei bei der mindestens einen Verbindung der Formel (III) die Substituenten R₁ und R₂ unabhängig voneinander für ein unsubstituiertes Benzol; ein halogeniertes Benzol, insbesondere ein chloriertes Benzol; ein alkoxyliertes Benzol, insbesondere ein C₁-C₁₀ alkoxyliertes Benzol, insbesondere ein C₁-C₄ alkoxyliertes Benzol; ein alkyliertes Benzol, insbesondere ein C₁-C₁₀ alkyliertes Benzol, insbesondere ein C₁-C₄ alkyliertes Benzol, stehen, am meisten bevorzugt stehen die Substituenten R₁ und R₂ für ein unsubstituiertes Benzol.

3. Einkomponentige hitzehärtende Epoxidharzzusammensetzung nach einem der vorgehenden Ansprüche, wobei bei der mindestens einen Verbindung der Formel (III) der Substituent R₃ für H oder eine Alkylgruppe mit 1 bis 8 Kohlenstoffatomen, insbesondere H oder eine Alkylgruppe mit 1 bis 4 Kohlenstoffatomen, insbesondere bevorzugt für H, steht.

4. Einkomponentige hitzehärtende Epoxidharzzusammensetzung nach einem der vorgehenden Ansprüche, wobei bei der mindestens einen Verbindung der Formel (III) es sich bei den Substituenten R₁ und R₂ jeweils um unsubstituiertes Benzol handelt und der Substituent R₃ für H oder eine Alkylgruppe mit 1 bis 4 Kohlenstoffatomen, insbesondere bevorzugt für H, steht.

5. Einkomponentige hitzehärtende Epoxidharzzusammensetzung nach einem der vorgehenden Ansprüche, wobei das Gewichtsverhältnis des mindestens einen Epoxidharz **A** mit durchschnittlich mehr als einer Epoxidgruppe pro Molekül zu der mindestens einen Verbindung der Formel (III) von 10 - 600, insbesondere 10 - 400, 10 - 160, 10 - 100, 10 - 35, 15 - 35, besonderes bevorzugt 20 - 25, beträgt.

6. Einkomponentige hitzehärtende Epoxidharzzusammensetzung nach einem der vorgehenden Ansprüche, wobei das Gewichtsverhältnis des mindestens einen latenten Härter für Epoxidharze **B** zu der mindestens einen Verbindung der Formel (III) von 0.5 - 8, insbesondere 0.5 - 7, insbesondere 0.5 - 3.5, insbesondere 0.5 - 2.5, besonderes bevorzugt 0.5 - 1.8, beträgt.

7. Einkomponentige hitzehärtende Epoxidharzzusammensetzung nach einem der vorgehenden Ansprüche, wobei der Anteil der mindestens einen Verbindung der Formel (III) von 0.1 Gew.-% - 15 Gew.-%, insbesondere von 0.5 Gew.-% - 10 Gew.-%, insbesondere von 1 Gew.-% - 8 Gew.-%, insbesondere von 1.5 Gew.-% - 5 Gew.-%, insbesondere bevorzugt von 1.5 Gew.-% - 3 Gew.-%, beträgt, bezogen auf das Gesamtgewicht der einkomponentigen hitzehärtenden Epoxidharzzusammensetzung.

8. Einkomponentige hitzehärtende Epoxidharzzusammensetzung nach einem der vorgehenden Ansprüche, wobei der latente Härter für Epoxidharze **B** ausgewählt ist aus Dicyandiamid, Guanaminen, Guanidinen, Anhydriden von mehrwertigen Carbonsäuren, Dihydraziden, und Aminoguanidinen, wobei Dicyandiamid bevorzugt ist.

9. Einkomponentige hitzehärtende Epoxidharzzusammensetzung nach einem der vorgehenden Ansprüche, wobei die hitzehärtende Epoxidharzzusammensetzung zusätzlich mindestens einen Beschleuniger **C** ausgewählt aus der Liste bestehend aus substituierten Harnstoffen, Imidazolen, Imidazolinen und blockierten Aminen aufweist.

10. Einkomponentige hitzehärtende Epoxidharzzusammensetzung nach Anspruch 9, wobei es sich bei dem latenten Härter **B** um ein Guanidin, insbesondere Dicyandiamid, handelt und der Beschleuniger **C** für Epoxidharze ausgewählt ist aus der Liste bestehend aus substituierten Harnstoffen und blockierten Aminen, insbesondere substituierten Harnstoffen.

11. Einkomponentige hitzehärtende Epoxidharzzusammensetzung nach einem der vorgehenden Ansprüche, wobei die hitzehärtende Epoxidharzzusammensetzung zusätzlich mindestens einen Zähigkeitsverbesserer **D** ausgewählt aus der Gruppe bestehend aus endständig blockierten Polyurethanpolymeren **D1**, Flüssigkautschuken **D2** und Core-Shell-Polymeren **D3** aufweist, vorzugsweise handelt es sich um endständig blockiertes Polyurethanpolymeren **D1.**

12. Verwendung einer hitzehärtenden Epoxidharzzusammensetzung gemäss einem der Ansprüche 1 bis 11 als einkomponentiger hitzehärtender Klebstoff, insbesondere als hitzehärtender einkomponentiger Klebstoff im Fahrzeugbau und Sandwichpanelbau.

13. Verfahren zur Verklebung von hitzestabilen Substraten umfassend die Schritte
i) Applizieren einer hitzehärtenden Epoxidharzzusammensetzung gemäss einem der Ansprüche 1 bis 11 auf die Oberfläche eines hitzestabilen Substrates **S1**, insbesondere eines Metalls;
ii) Kontaktieren der applizierten hitzehärtenden Epoxidharzzusammensetzung mit der Oberfläche eines weiteren hitzestabilen Substrates **S2**, insbesondere eines Metalls;
iii) Erhitzen der Zusammensetzung auf eine Temperatur von 100 - 220°C, insbesondere von 120 - 200°C;
wobei das Substrat **S2** aus dem gleichen oder einem unterschiedlichen Material wie das Substrat **S1** besteht.

14. Verklebter Artikel erhalten aus dem Verfahren gemäss Anspruch 13.

15. Verwendung mindestens einer Verbindung der Formel (III), wie sie als Verbindung der Formel (III) in den Ansprüchen 1 bis 11 beschrieben ist, zur Erhöhung der Lagerstabilität einer einkomponentigen hitzehärtenden Epoxidharzzusammensetzung, insbesondere eines hitzehärtenden Epoxidharzklebstoffs, insbesondere im Fahrzeugbau und Sandwichpanelbau, vorzugsweise handelt es sich um eine einkomponentige hitzehärtende Epoxidharzzusammensetzung gemäss einem der Ansprüche 1 bis 11.
